# EUROPÄISCHE PATENTANMELDUNG

(11) **EP 4 210 195 A1**
(43) Veröffentlichungstag der Anmeldung: **12.07.2023**
(21) Anmeldenummer: 22150887.2
(22) Anmeldetag: 11.01.2022
(51) Int. Cl.: H02J 7/00, B25F 5/00, H02H 7/18

(54) **ENERGIEVERSORGUNGSVORRICHTUNG MIT MINDESTENS EINEM STROMTRENNENDEN ELEMENT**

(71) Anmelder: Hilti Aktiengesellschaft, 9494 Schaan (LI)
(72) Erfinder: Stanger, Robert, 87600 Kaufbeuren (DE); Hauser, Klaus, 86830 Schwabmünchen (DE); Guggemos, Andreas, 86825 Bad Wörishofen (DE); Hartmann, Markus, 87665 Mauerstetten (DE)
(74) Vertreter: Hilti Aktiengesellschaft Corporate Intellectual Property

(57) **Zusammenfassung**

Die vorliegende Erfindung betrifft eine Energieversorgungsvorrichtung, insbesondere für eine Werkzeugmaschine, wobei die Energieversorgungsvorrichtung mindestens ein stromtrennendes Element mit einer Nenn-Stromtragfähigkeit I_N aufweist, wobei die Nenn-Stromtragfähigkeit I_N des mindestens einen stromtrennenden Elements größer ist als ein Wert des Ausdrucks: 1000 . (DCR_I) ^ - 0,6, wobei DCR_I der Innenwiderstand der Energieversorgungsvorrichtung ist und nach der Norm IEC61960 gemessen wird. Eine Peak-Stromtragfähigkeit I_P des mindestens einen stromtrennenden Elements kann für eine Belastungsdauer von mindestens 100 Millisekunden größer als 3000 . (DCR_I) ^ - 0,6 sein.

## Beschreibung

Die vorliegende Erfindung betrifft eine Energieversorgungsvorrichtung, insbesondere für eine Werkzeugmaschine, wobei die Energieversorgungsvorrichtung mindestens ein stromtrennendes Element mit einer Nenn-Stromtragfähigkeit I_N aufweist, wobei die Nenn-Stromtragfähigkeit I_N des mindestens einen stromtrennenden Elements größer ist als ein Wert des Ausdrucks: 1000 · (DCR_I) ^ - 0,6, wobei OCR_I der Innenwiderstand der Energieversorgungsvorrichtung ist und nach der Norm IEC61960 gemessen wird. Eine Peak-Stromtragfähigkeit I_P des mindestens einen stromtrennenden Elements kann für eine Belastungsdauer von mindestens 100 Millisekunden größer als 3000 · (DCR_I) ^ - 0,6 sein.

### Hintergrund der Erfindung:

Sogenannte kabellose Werkzeugmaschinen, wie beispielsweise Akku-Schrauber, Bohrmaschinen, Sägen, Schleifgeräte, oder dergleichen, können zur Energieversorgung mit einer Energieversorgungsvorrichtung verbunden werden. Die Energieversorgungsvorrichtung kann eine Vielzahl an Energiespeicherzellen aufweisen, mit deren Hilfe elektrische Energie aufgenommen, gespeichert und wieder abgegeben werden kann. Wenn die Energieversorgungsvorrichtung mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung, wie einem Ladegerät, verbunden, sodass elektrische Energie zu den Energiespeicherzellen gelangen kann.

Moderne Energieversorgungsvorrichtungen sind in der Lage, hohe Konstantströme abzugeben. Durch eine konservative Auslegung von Sicherungsvorrichtungen kann es allerdings vorkommen, dass insbesondere sehr leistungsstarke Energieversorgungsvorrichtungen ihre Leistung nicht optimal an das Gerät, welches sie mit elektrischer Energie versorgen sollen, abgeben können. Mithin können Situationen entstehen, in denen das elektrische Potential einer Energieversorgungsvorrichtung nicht optimal ausgeschöpft werden kann, da die Übertragung der entsprechenden Leistungen bzw. elektrischen Ströme durch die Sicherungsvorrichtungen in der Energieversorgungsvorrichtung eingeschränkt wird.

Die Aufgabe, die der vorliegenden Erfindung zugrunde liegt, besteht darin, die Mängel und Nachteile des Standes der Technik zu überwinden und eine Energieversorgungsvorrichtung bereitzustellen, die über eine verbesserte Hochstromfähigkeit verfügt, ohne dass es dabei zu Sicherheitsrisiken für die Energieversorgungsvorrichtung, den Verbindungspartner, hier eine Werkzeugmaschine, oder den Nutzer des Systems aus Energieversorgungsvorrichtung und Werkzeugmaschine kommt.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Energieversorgungsvorrichtung, insbesondere für eine Werkzeugmaschine, vorgesehen, wobei die Energieversorgungsvorrichtung mindestens ein stromtrennendes Element mit einer Nenn-Stromtragfähigkeit I_N aufweist, wobei die Nenn-Stromtragfähigkeit I_N des mindestens einen stromtrennenden Elements größer oder gleich ist als ein Wert des folgenden Ausdrucks: 1000 · (DCR_I) ^ - 0,6, wobei DCR_I der Innenwiderstand der Energieversorgungsvorrichtung ist und nach der Norm IEC61960 gemessen wird. Die Nenn-Stromtragfähigkeit I_N des mindestens einen stromtrennenden Elements erfüllt somit die Relation
I_N > 1000 · (DCR_I) ^ - 0,6 bzw. I_N > 1000 · (DCR_I)^{-0.6}.

Vorzugsweise ist die Nenn-Stromtragfähigkeit I_N des mindestens einen stromtrennenden Elements größer als das Tausendfache des Ausdrucks: (DCR_I) ^ - 0,6. Bei dem Innenwiderstand der Energieversorgungsvorrichtung, die nach der Norm IEC61960 gemessen wird, handelt es sich vorzugsweise um einen Gleichstromwiderstand. Es ist im Sinne der Erfindung bevorzugt, dass die Nenn-Stromtragfähigkeit I_N des stromtrennenden Elements in der Einheit Ampere (A) angebeben wird, ebenso wie die Peak-Stromtragfähigkeit I_P. Der Innenwiderstand DCR_I der Energieversorgungsvorrichtung wird vorzugsweise in der Einheit Milliohm (mOhm) angegeben. Die Energieversorgungsvorrichtung mit dem mindestens eines stromtrennenden Element ist besonders gut dazu eingerichtet, in Energieversorgungsvorrichtungen eingesetzt zu werden, die Konstantströme in einem Bereich von 50 Ampère (A), bevorzugt mehr als 70 A und am meisten bevorzugt mehr als 100 A abgeben können. Mit solchen Energieversorgungsvorrichtungen können vor allem leistungsstarke Werkzeugmaschinen mit elektrischer Energie versorgt werden. Vorteilhafterweise kann mit der Erfindung eine hochstromfähige Energieversorgungsvorrichtung bereitgestellt werden, d.h. eine Energieversorgungsvorrichtung, die aufgrund ihrer Sicherungsfunktion dazu in der Lage ist, mit solchen hohen Konstantströmen gut umzugehen bzw. ihnen standzuhalten, ohne dass es zu thermischen Überlastungen oder anderen Beeinträchtigungen kommt. Bei der vorgeschlagenen Energieversorgungsvorrichtung handelt es sich vorzugsweise um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben.

Die Erfinder haben erkannt, dass mit der Erfindung die Hochstromfähigkeit der Energieversorgungsvorrichtung deutlich verbessert werden kann. Im Kontext der Erfindung ist es bevorzugt, die stromtrennenden Element der Energieversorgungsvorrichtung in Abhängigkeit vom Innenwiderstand der Energieversorgungsvorrichtung auszuwählen. Es ist im Sinne der Erfindung insbesondere bevorzugt, die Dimensionierung und/oder Auslegung der Energieversorgungsvorrichtung in Abhängigkeit vom Innenwiderstand der Energieversorgungsvorrichtung festzulegen. Dadurch können besonders passgenaue Sicherungslösungen für die Energieversorgungsvorrichtung bereitgestellt werden, die es vorteilhafterweise ermöglichen, eine optimale Leistung aus der Energieversorgungsvorrichtung für die Werkzeugmaschine nutzbar zu machen. Insbesondere können durch die Erfindung überraschend hohe Peak-Leistungen aus der Energieversorgungsvorrichtung abgerufen werden, ohne dass das mindestens eine stromtrennende Element einen Stromfluss von der Energieversorgungsvorrichtung in Richtung der Werkzeugmaschine verhindert.

Bei dem mindestens eine stromtrennenden Element kann es sich insbesondere um eine Sicherung oder um eine Sicherungsvorrichtung handeln. Solche Sicherungen oder Sicherungsvorrichtungen sind vorzugsweise dazu eingerichtet, einen elektrischen Stromkreis zu unterbrechen, wenn der elektrische Strom eine festgelegte Stromstärke über eine vorgegebene Zeit hinaus überschreitet. Im Kontext der vorliegenden Erfindung ist das mindestens eine stromtrennende Element Bestandteil der Energieversorgungsvorrichtung, wobei die Energieversorgungsvorrichtung mit einer Werkzeugmaschine verbunden werden kann, um die Werkzeugmaschine mit elektrischer Energie zu versorgen. Beispielsweise kann das mindestens eine stromtrennende Element der vorliegenden Energieversorgungsvorrichtung als aktivierbares stromtrennendes Element ausgebildet sein. Das bedeutet im Sinne der Erfindung bevorzugt, dass das stromtrennende Element durch ein Signal eines Microcontrollers der Energieversorgungsvorrichtung und/oder der Werkzeugmaschine, mit dem die Energieversorgungsvorrichtung verbunden vorliegen kann, aktiviert werden kann. In dieser Ausgestaltung der Erfindung kann von dem Microcontroller der Energieversorgungsvorrichtung und/oder der Werkzeugmaschine festgestellt werden, dass ein zu hoher elektrischer Strom über eine zu lange Zeit fließt, woraufhin der Microcontroller in der Lage ist, das mindestens eine stromtrennende Element der Energieversorgungsvorrichtung zu aktivieren, so dass ein Stromfluss unterbrochen werden kann. Um festzustellen, dass ein zu hoher elektrischer Strom über eine zu lange Zeit fließt, kann die Energieversorgungsvorrichtung über eine geeignete Sensorik und Auswertemittel verfügen. Darüber hinaus weist die Energieversorgungsvorrichtung in dieser Ausgestaltung der Erfindung entsprechende Kommunikationsmittel auf, um ein Aktivierungssignal vom Microcontroller an das mindestens eine stromtrennende Element der Energieversorgungsvorrichtung zu senden. Diese Kommunikationsmittel können drahtlos oder drahtbehaftet ausgebildet sein. Die Verwendung eines aktivierbaren stromtrennenden Elements hat sich als besonders vorteilhaft erwiesen, weil das stromtrennende Element in dieser Ausgestaltung der Erfindung deaktiviert werden kann, sobald die Aktivierungsgründe wegfallen. Wenn, mit anderen Worten, der Microcontroller feststellt, dass kein zu hoher Strom mehr über einen längeren Zeitraum fließt oder geflossen ist, so kann das stromtrennende Element deaktiviert und die Stromleitung wieder geschlossen werden. Mithin ist die Stromtrennung in dieser Ausgestaltung der Erfindung reversibel ausgebildet, indem sie mit elektronischen Mitteln bewirkt wird.

In einem anderen Ausführungsbeispiel der Erfindung kann das mindestens eine stromtrennende Element als Schmelzsicherung ausgebildet ist. Das Anschlagen einer Schmelzsicherung wird im Sinne der Erfindung als «passive Auslösung» des stromtrennenden Elements bezeichnet, da sie von außen nicht steuerbar ist. In noch einer weiteren Ausgestaltung der Erfindung kann das mindestens eine stromtrennende Element als Mosfet ausgebildet sein oder einen Mosfet umfassen. Solche Metall-Oxid-Halbleiter-Feldeffekttransistoren («Mosfets») haben sich als besonders wirkungsvolle Sicherungen in einer Energieversorgungsvorrichtung für eine Werkzeugmaschine erwiesen.

Neben der Fähigkeit, große Ströme zu leiten, haben Tests gezeigt, dass mit der Erfindung auch die vorgeschlagene Energieversorgungsvorrichtung besonders wirksam vor einer zu hohen Stromlast, beispielsweise durch einen äußeren Kurzschluss, geschützt werden kann. Die Erfindung verbessert also nicht nur die Stromtragfähigkeit der Energieversorgungsvorrichtung, sondern die Erfindung stellt auch eine wirksame Sicherungslösung für eine Energieversorgungsvorrichtung bereit, wobei die Energieversorgungsvorrichtung insbesondere dazu geeignet ist, in Verbindung mit einer Werkzeugmaschine verwendet zu werden.

Es ist im Sinne der Erfindung bevorzugt, dass die Nenn-Stromtragfähigkeit I_N des mindestens einen stromtrennenden Elements größer ist als ein Wert des folgenden Ausdrucks: 1750 · (DCR_I) ^ - 0,6, bevorzugt größer als ein Wert des Ausdrucks: 2500 · (DCR_I) ^ - 0,6, wobei DCR_I der Innenwiderstand der Energieversorgungsvorrichtung ist und nach der Norm IEC-61960 gemessen wird. Vorzugsweise ist die Nenn-Stromtragfähigkeit I_N des mindestens einen stromtrennenden Elements größer als das 1750-Fache des Ausdrucks: (DCR_I) ^ - 0,6 bzw. größer als das 2500-Fache des Ausdrucks: (DCR_I) ^ - 0,6. Wenn die Energieversorgungsvorrichtung eine Nenn-Stromtragfähigkeit I_N in den genannten Bereichen aufweist, setzt sich die Energieversorgungsvorrichtung zum einen vom Stand der Technik ab; zum anderen kann die Hochstromtragfähigkeit der Energieversorgungsvorrichtung weiter verbessert werden. Gemäß dieser Ausführungsbeispiele der Erfindung erfüllt die Nenn-Stromtragfähigkeit I_N des mindestens einen stromtrennenden Elements die Relationen
I_N > 1750 · (DCR_I) ^ - 0,6 bzw. I_N > 1750 · (DCR_I)^{-0,6} oder
I_N > 2500 · (DCR_I) ^ - 0,6 bzw. I_N > 2500 . (DCR_I)^{-0,6} .

Es ist im Sinne der Erfindung bevorzugt, dass das mindestens eine stromtrennende Element eine Peak-Stromtragfähigkeit I_P aufweist, wobei die Peak-Stromtragfähigkeit I_P für eine Belastungsdauer von mindestens 100 Millisekunden größer ist als ein Wert des folgenden Ausdrucks: 3000 · (DCR_I) ^ - 0,6, wobei DCR_I der Innenwiderstand der Energieversorgungsvorrichtung ist und nach der Norm IEC61960 gemessen wird. Ein Peak stellt im Sinne der Erfindung ein lokales Maximum der Stromtragfähigkeit dar, wobei ein solcher Peak im Kontext der vorliegenden Erfindung vorzugsweise mindestens 100 Millisekunden (ms) dauert. Vorteilhafterweise ist das das mindestens eine stromtrennende Element der vorgeschlagenen Energieversorgungsvorrichtung dazu eingerichtet, einen Peak-Strom von 3000 · (DCR_I) ^ - 0,6 durchzulassen bzw. einem solchen standzuhalten. Mithin erfüllt das mindestens eine stromtrennende Element in dieser Ausgestaltung der Erfindung die Relation
I_P > 3000 . (DCR_I) ^ - 0,6 bzw. I_P > 3000 . (DCR_I)^{-0,6}.

Vorzugsweise weist das stromtrennende Element die Peak-Stromtragfähigkeit I_P in den genannten Bereichen auf. Es ist im Sinne der Erfindung bevorzugt, dass die Peak-Stromtragfähigkeit I_P des mindestens einen stromtrennenden Elements größer ist als ein Wert des folgenden Ausdrucks: 5250 · (DCR_I) ^ - 0,6, bevorzugt größer als ein Wert des Ausdrucks: 7500 · (DCR_I) ^ - 0,6, wobei DCR_I der Innenwiderstand der Energieversorgungsvorrichtung ist und nach der Norm IEC61960 gemessen wird. Gemäß dieser Ausführungsbeispiele der Erfindung erfüllt die Peak-Stromtragfähigkeit I_P des mindestens einen stromtrennenden Elements die Relationen
I_P > 5250 · (DCR_I) ^ - 0,6 bzw. I_P > 5250 · (DCR_I)^{-0,6} oder
I_P > 7500 . (DCR_I) ^ - 0,6 bzw. I_P > 7500 . (DCR_I)^{-0,6} .

Vorzugsweise ist die Peak-Stromtragfähigkeit I_P des mindestens einen stromtrennenden Elements größer als das 5250-Fache des Ausdrucks: (DCR_I) ^ - 0,6 bzw. größer als das 7500-Fache des Ausdrucks: (DCR_I) ^ - 0,6.

Es ist im Sinne der Erfindung bevorzugt, dass eine Stromlast in der Energieversorgungsvorrichtung im Wesentlichen gleichmäßig auf die stromtrennenden Elemente verteilbar ist, wenn die Energieversorgungsvorrichtung mehr als ein stromtrennendes Element aufweist. Das bedeutet im Sinne der Erfindung bevorzugt, dass sich die Stromlasten, die die einzelnen stromtrennenden Elemente tragen, um weniger als 5 % voneinander unterscheiden. Mit anderen Worten schwanken die Stromlasten der einzelnen stromtrennenden Elemente um nicht mehr als 5 % bzw. sie liegen in einem Korridor von +/- 5 %. Die im Wesentlichen gleichmäßige Verteilung der Stromlast auf mehrere stromtrennende Elemente kann zum Beispiel dadurch erreicht werden, dass die stromtrennenden Elemente innerhalb der Energieversorgungsvorrichtung parallelgeschaltet werden. Die Energieversorgungsvorrichtung weist einen Pluspol und einen Minuspol auf, wobei das stromtrennende Element mit dem Pluspol oder dem Minuspol verbunden vorliegen kann, wenn die Energieversorgungsvorrichtung genau ein stromtrennendes Element aufweist. Wenn die Energieversorgungsvorrichtung mehr als ein stromtrennendes Element aufweist, liegen diese stromtrennenden Elemente vorzugsweise parallelgeschaltet vor, wobei die Einheiten aus parallelgeschalteten stromtrennenden Elementen jeweils mit dem Pluspol oder mit dem Minuspol der Energieversorgungsvorrichtung verbunden vorliegen können (vgl. Figuren).

Es ist im Sinne der Erfindung bevorzugt, dass ein Gesamt-Innenwiderstand DCR_ges der Energieversorgungsvorrichtung größer ist als 20 Milliohm (mOhm).

Es ist im Sinne der Erfindung bevorzugt, dass die Energieversorgungsvorrichtung mindestens eine Energiespeicherzelle («Zelle») umfasst, wobei die mindestens eine Zelle einen Innenwiderstand OCR_I von kleiner als 10 Milliohm (mOhm) aufweist. In bevorzugten Ausgestaltungen der Erfindung kann der Innenwiderstand OCR_I der mindestens einen Zelle kleiner als 8 Milliohm und bevorzugt kleiner 6 Milliohm sein. Dabei wird der Innenwiderstand OCR_I vorzugsweise nach der Norm IEC61960 gemessen. Ein geringer Innenwiderstand OCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand OCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A_Z der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V_Z der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen V_Z der mindestens einen Zelle, wobei als Einheit für das Volumen die Raum-Maßeinheit «Liter» (l) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden · Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen à fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A_Z und ein Volumen V_Z aufweist, wobei ein Verhältnis A_Z/V_Z von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A_Z der mindestens einen Zelle ist größer ist als beispielsweise das Achtfache der dritten Wurzel des Quadrats des Volumens V_Z kann vorzugsweise auch durch die Formel ***A*_Z>8*(*V*_Z)^(2/3)** zum Ausdruck gebracht werden. In einer anderen Schreibweise kann dieser Zusammenhang dadurch beschrieben werden, dass das Verhältnis (A_Z)/(V_Z) von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Zellgeometrien, die beispielsweise die Relation von *A*_Z>8*(V_Z)^(2/3) erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A_Z von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V_Z der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 50 Ampère, bevorzugt größer als 70 Ampère, am meisten bevorzugt größer 100 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 50 und 70 A als offenbart gelten, also zum Beispiel 51; 62,3; 54, 65,55 oder 57,06 Ampère usw. Darüber hinaus sollen auch Werte zwischen 70 und 100 A als offenbart gelten, also zum Beispiel 72; 83,3; 96, 78,55, 87,25 oder 98,07 Ampère usw.

Es ist im Sinne der Erfindung bevorzugt, dass die Energieversorgungsvorrichtung eine Entlade-C-Rate von größer als 80 · t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 · t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 50 Ampère, bevorzugt größer als 70 Ampère oder noch mehr bevorzugt größer als 100 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: schematische Schnittdarstellung einer bevorzugten Ausgestaltung der Energieversorgungsvorrichtung
- Fig. 2: schematische Schnittdarstellung einer Werkzeugmaschine mit einer bevorzugten Ausgestaltung der Energieversorgungsvorrichtung
- Fig. 3: schematische Schnittdarstellung einer bevorzugten Ausgestaltung der Energieversorgungsvorrichtung
- Fig. 4: schematische Darstellung einer bevorzugten Ausgestaltung einer Elektronik der Energieversorgungsvorrichtung bei einem stromtrennenden Element
- Fig. 5: schematische Darstellung einer bevorzugten Ausgestaltung einer Elektronik der Energieversorgungsvorrichtung bei zwei stromtrennenden Elementen

### Ausführungsbeispiele und Figurenbeschreibung:

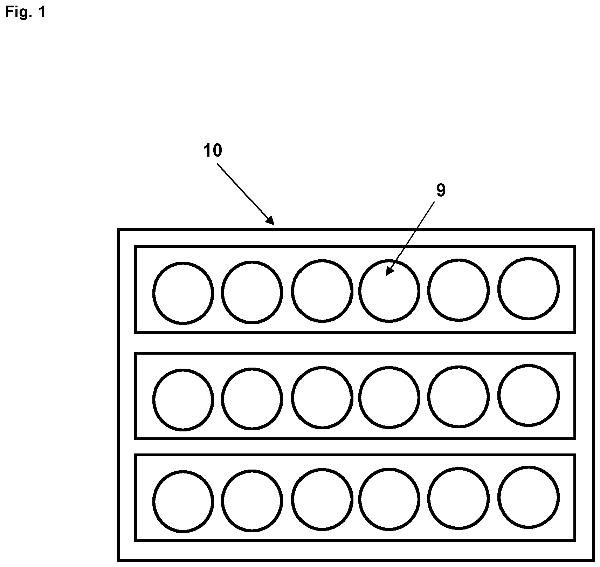

Figur 1 zeigt eine schematische Schnittdarstellung einer bevorzugten Ausgestaltung der Energieversorgungsvorrichtung 10. Die in Fig. 1 dargestellte Energieversorgungsvorrichtung 10 weist achtzehn Energiespeicherzellen 9 auf, wobei die achtzehn Zellen 9 in drei Strängen innerhalb der Energieversorgungsvorrichtung 10 angeordnet vorliegen. Die Zellen 9 werden insbesondere durch die Kreise symbolisiert, während die Stränge durch die länglichen Rechtecke symbolisiert werden, die die Kreise («Zellen 9») umgeben.

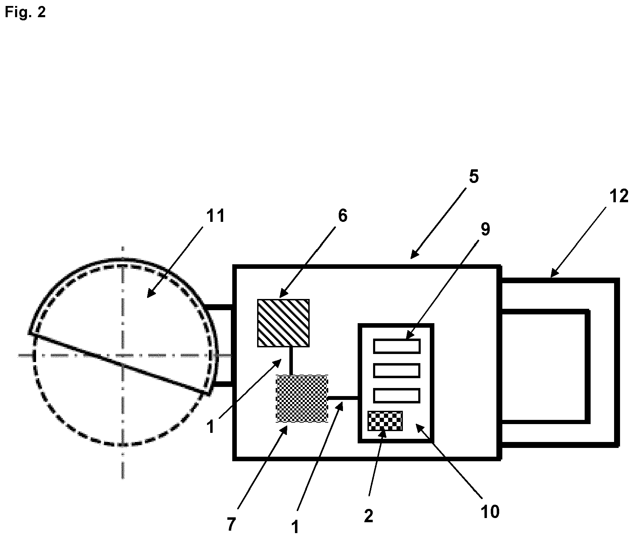

Fig. 2 zeigt eine schematische Ansicht einer Werkzeugmaschine 5 mit einer vorgeschlagenen Energieversorgungsvorrichtung 10. Bei der Werkzeugmaschine 5 kann es sich beispielsweise um einen Trennschleifer handeln, der als Werkzeug 11 eine Trennscheibe aufweist. Die Werkzeugmaschine 5 kann einen Griff 12 aufweisen, der beispielsweise als hinterer Handgriff ausgebildet ist. Außerdem kann die Werkzeugmaschine 5 einen Motor 6, eine Elektronik 7 und/oder eine Energieversorgungsvorrichtung 10 aufweisen, wobei der Motor 6, die Elektronik 7 und/oder die Energieversorgungsvorrichtung 10 über einen Stromleiter 1 miteinander verbunden werden können. Die Energieversorgungsvorrichtung 10 weist mindestens ein stromtrennendes Element 2 aufweisen, wobei die in Figur 2 dargestellte Energieversorgungsvorrichtung 10 genau ein stromtrennendes Element 2 aufweist.

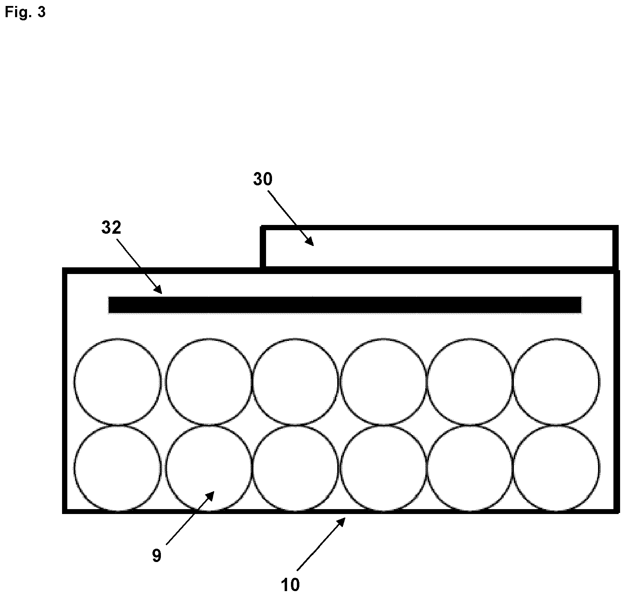

Figur 3 zeigt eine weitere schematische Schnittdarstellung einer bevorzugten Ausgestaltung der Energieversorgungsvorrichtung 10. Dargestellten sind zwei Stränge von Energiespeicherzellen 9, wobei jeder Strang sechs Energiespeicherzellen 9 aufweist. Insgesamt weist die in Fig. 3 dargestellte Energieversorgungsvorrichtung 10 zwölf Energiespeicherzellen 9 auf.

Auf ihrer Oberseite weist die Energieversorgungsvorrichtung 10 eine Schnittstelle 30 zur Verbindung der Energieversorgungsvorrichtung 10 mit einer Werkzeugmaschine 5 auf. Beispielsweise kann die Energieversorgungsvorrichtung 10 in einen Hohlraum der Werkzeugmaschine 5 eingeführt werden oder an einer Außenseite der Werkzeugmaschine 5 befestigt werden. Die Energieversorgungsvorrichtung 10 weist vorzugsweise eine Elektronik 32 auf, die im Sinne der Erfindung vorzugsweise auch als «Zell-Management-System ZMS» oder als «Batterie-Management-System BMS» bezeichnet werden kann. Die Elektronik 32 der Energieversorgungsvorrichtung 10 kann einen Microcontroller (nicht dargestellt) umfassen, der dazu eingerichtet sein kann, ein stromtrennendes Element 2 der Energieversorgungsvorrichtung 10 zu aktivieren.

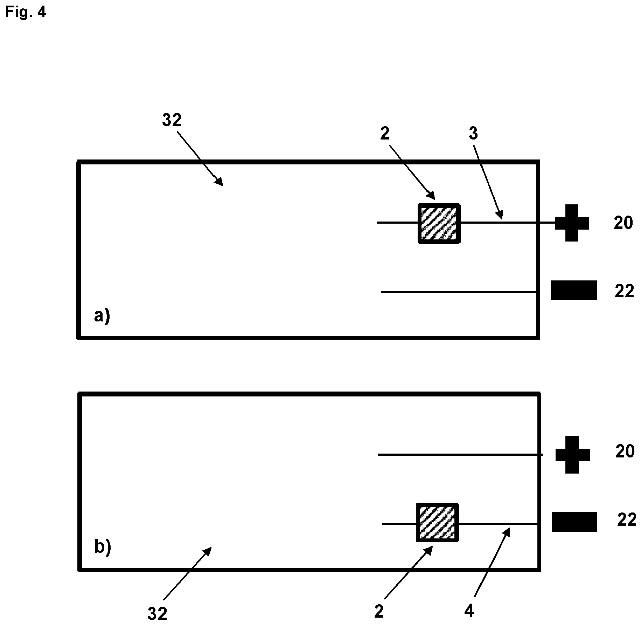

Fig. 4 zeigt mögliche Ausführungsbeispiele der Elektronik 32 der Energieversorgungsvorrichtung 10. In der oberen Teilfigur 4a weist die Energieversorgungsvorrichtung 10 genau ein stromtrennendes Element 2 auf, wobei das eine stromtrennende Element 2 in dem positiven Strompfad 3 der Elektronik 32 der Energieversorgungsvorrichtung 10 angeordnet vorliegt. Der positive Strompfad 3 ist mit dem Pluspol 20 der Energieversorgungsvorrichtung 10 verbunden. In der unteren Teilfigur 4b weist die Energieversorgungsvorrichtung 10 ebenfalls genau ein stromtrennendes Element 2 auf, wobei das eine stromtrennende Element 2 in dem negativen Strompfad 4 der Elektronik 32 der Energieversorgungsvorrichtung 10 angeordnet vorliegt. Der negative Strompfad 4 ist mit dem Minuspol 22 der Energieversorgungsvorrichtung 10 verbunden. Die Elektronik 32 der Energieversorgungsvorrichtung 10 liegt in der Energieversorgungsvorrichtung 10 angeordnet vor.

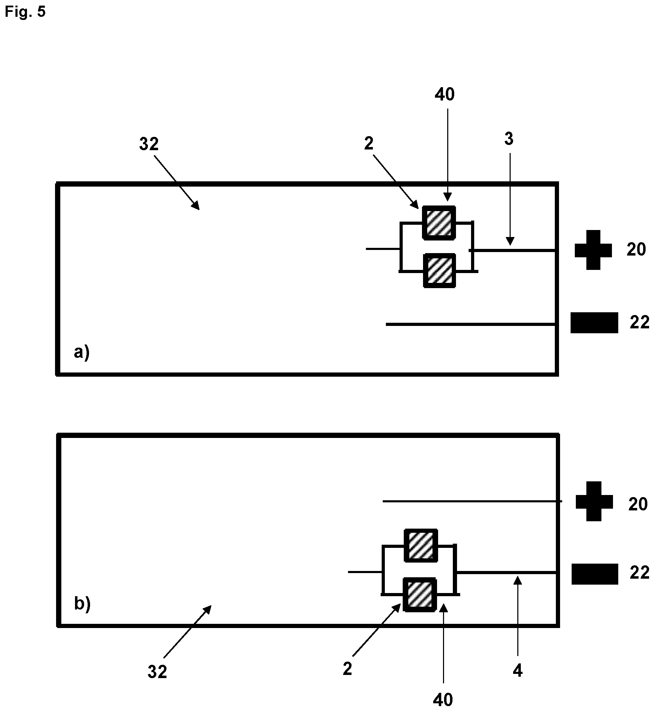

Fig. 5 zeigt mögliche Ausführungsbeispiele der Elektronik 32 der Energieversorgungsvorrichtung 10, wenn die Energieversorgungsvorrichtung 10 mehr als ein stromtrennendes Element 2 aufweist. In der oberen Teilfigur 5a weist die Energieversorgungsvorrichtung 10 beispielsweise zwei stromtrennende Elemente 2 auf, die miteinander eine Einheit 40 bilden. In dieser Einheit 40 sind die stromtrennenden Element 2 parallelgeschaltet. Die Einheit 40 mit den zwei stromtrennenden Elementen 2 ist in Teilfigur 5a in dem positiven Strompfad 3 angeordnet und mit dem Pluspol 20 der Energieversorgungsvorrichtung 10 verbunden. In der unteren Teilfigur 5b weist die Energieversorgungsvorrichtung 10 ebenfalls zwei stromtrennende Elemente 2 auf, die miteinander eine Einheit 40 bilden. Auch in dieser Einheit 40 sind die stromtrennenden Element 2 parallelgeschaltet. Die Einheit 40 mit den zwei stromtrennenden Elementen 2 ist in Teilfigur 5b in dem negativen Strompfad 4 angeordnet und mit dem Minuspol 20 der Energieversorgungsvorrichtung 10 verbunden.

### Bezugszeichenliste

- 1: Stromleiter
- 2: stromtrennendes Element
- 3: positiver Strompfad
- 4: negativer Strompfad
- 5: Werkzeugmaschine
- 6: Motor der Werkzeugmaschine
- 7: Elektronik der Werkzeugmaschine
- 8: Schnittstelle der Werkzeugmaschine zur Aufnahme einer Energieversorgungsvorrichtung
- 9: Zelle einer Energieversorgungsvorrichtung, Energiespeicherzelle
- 10: Energieversorgungsvorrichtung
- 11: Werkzeug der Werkzeugmaschine
- 12: Griff der Werkzeugmaschine
- 13: Bedienelement der Werkzeugmaschine, z. B. Schalter
- 20: Pluspol
- 22: Minuspol
- 30: Schnittstelle zwischen Werkzeugmaschine und Energieversorgungsvorrichtung
- 32: Elektronik der Energieversorgungsvorrichtung
- 40: Einheit aus bevorzugt parallelgeschalteten stromtrennenden Elementen

## Patentansprüche

1. Energieversorgungsvorrichtung (10), insbesondere für eine Werkzeugmaschine (5), **dadurch gekennzeichnet, dass**
die Energieversorgungsvorrichtung (10) mindestens ein stromtrennendes Element (2) mit einer Nenn-Stromtragfähigkeit I_N aufweist, wobei die Nenn-Stromtragfähigkeit I_N des mindestens einen stromtrennenden Elements (2) größer ist als ein Wert des folgenden Ausdrucks: 1000 · (DCR_I) ^ - 0,6, wobei DCR_I der Innenwiderstand der Energieversorgungsvorrichtung (10) ist und nach der Norm IEC61960 gemessen wird.

2. Energieversorgungsvorrichtung (10) nach Anspruch 1
**dadurch gekennzeichnet, dass**
die Nenn-Stromtragfähigkeit I_N des mindestens einen stromtrennenden Elements (2) größer ist als ein Wert des folgenden Ausdrucks: 1750 · (DCR_I) ^ - 0,6, bevorzugt größer als ein Wert des Ausdrucks: 2500 · (DCR_I) ^ - 0,6, wobei DCR_I der Innenwiderstand der Energieversorgungsvorrichtung (10) ist und nach der Norm IEC61960 gemessen wird.

3. Energieversorgungsvorrichtung (10) nach Anspruch 1 oder 2
**dadurch gekennzeichnet, dass**
das mindestens eine stromtrennende Element (2) eine Peak-Stromtragfähigkeit I_P aufweist, wobei die Peak-Stromtragfähigkeit I_P für eine Belastungsdauer von mindestens 100 Millisekunden größer ist als ein Wert des folgenden Ausdrucks: 3000 · (DCR_I) ^ - 0,6, wobei DCR_I der Innenwiderstand der Energieversorgungsvorrichtung (10) ist und nach der Norm IEC61960 gemessen wird.

4. Energieversorgungsvorrichtung (10) nach einem der vorhergehenden Ansprüche **dadurch gekennzeichnet, dass**
die Peak-Stromtragfähigkeit I_P des mindestens einen stromtrennenden Elements (2) größer ist als ein Wert des folgenden Ausdrucks: 5250 · (DCR_I) ^ - 0,6, bevorzugt größer als ein Wert des Ausdrucks: 7500 · (DCR_I) ^ - 0,6, wobei DCR_I der Innenwiderstand der Energieversorgungsvorrichtung (10) ist und nach der Norm IEC61960 gemessen wird.

5. Energieversorgungsvorrichtung (10) nach einem der vorhergehenden Ansprüche **dadurch gekennzeichnet, dass**
eine Stromlast in der Energieversorgungsvorrichtung (10) im Wesentlichen gleichmäßig auf die stromtrennenden Elemente (2) verteilbar ist, wenn die Energieversorgungsvorrichtung (10) mehr als ein stromtrennendes Element (2) aufweist.

6. Energieversorgungsvorrichtung (10) nach einem der vorhergehenden Ansprüche **dadurch gekennzeichnet, dass**
ein Gesamt-Innenwiderstand DCR_ges der Energieversorgungsvorrichtung (10) größer ist als 20 Milliohm.

7. Energieversorgungsvorrichtung (10) nach einem der vorhergehenden Ansprüche **dadurch gekennzeichnet, dass**
das mindestens eine stromtrennende Element (2) als aktivierbares stromtrennendes Element ausgebildet ist.

8. Energieversorgungsvorrichtung (10) nach einem der Ansprüche 1 bis 7
**dadurch gekennzeichnet, dass**
das mindestens eine stromtrennende Element (2) als Schmelzsicherung ausgebildet ist.

9. Energieversorgungsvorrichtung (10) nach einem der Ansprüche 1 bis 7
**dadurch gekennzeichnet, dass**
das mindestens eine stromtrennende Element (2) als Mosfet ausgebildet ist oder einen Mosfet umfasst.

10. Energieversorgungsvorrichtung (10) nach einem der vorhergehenden Ansprüche **dadurch gekennzeichnet, dass**
die Energieversorgungsvorrichtung (10) mindestens eine Energiespeicherzelle (9) umfasst, wobei die mindestens eine Energiespeicherzelle (9) einen Innenwiderstand DCR_l von kleiner als 10 Milliohm aufweist.

11. Energieversorgungsvorrichtung (10) nach einem der vorhergehenden Ansprüche **dadurch gekennzeichnet, dass**
die Energieversorgungsvorrichtung (10) mindestens eine Energiespeicherzelle (9) umfasst, wobei die mindestens Energiespeicherzelle (9) eine Oberfläche A_Z und ein Volumen V_Z aufweist, wobei ein Verhältnis (A_Z)/(V_Z) von Oberfläche zu Volumen größer ist als das Sechsfache, bevorzugt das Achtfache und besonders bevorzugt das Zehnfache des Kehrwerts der dritten Wurzel des Volumens.

12. Energieversorgungsvorrichtung (10) nach einem der vorhergehenden Ansprüche **dadurch gekennzeichnet, dass**
die Energieversorgungsvorrichtung (10) mindestens eine Energiespeicherzelle (9) umfasst, wobei ein Verhältnis eines Widerstands der mindestens einen Energiespeicherzelle (9) zu einer Oberfläche A_Z der mindestens einen Zelle kleiner als 0,2 Milliohm/cm² ist, bevorzugt kleiner als 0,1 Milliohm/cm², am meisten bevorzugt kleiner als 0,05 Milliohm/cm².

13. Energieversorgungsvorrichtung (10) nach einem der vorhergehenden Ansprüche **dadurch gekennzeichnet, dass**
die Energieversorgungsvorrichtung (9) eine Kapazität von wenigstens 2,2 Ah, bevorzugt wenigstens 2,5 Ah aufweist.
